# DEMANDE DE BREVET EUROPEEN

(11) **EP 0 863 096 A1**
(43) Date de publication de la demande: **09.09.1998**
(21) Numéro de dépôt: 97810130.1
(22) Date de dépôt: 07.03.1997
(51) Int. Cl.: B65G 61/00, B65G 59/02

(54) **Dispositif de levage**

(71) Demandeur: FABRIQUES DE TABAC REUNIES S.A., 2003 Neuchâtel-Serrières (CH)
(72) Inventeur: Nauer, Jean-Jacques, 1785 Cressier (CH); Cestonaro, Jean, 2074 Marin (CH)
(74) Mandataire: BOVARD AG - Patentanwälte

(57) **Abrégé**

Le dispositif de levage (1) comprend trois ou quatre moyens de suspension (41,42,43,44) constitués chacun d'un jeu de trois courroies crantées sans fin (40) engagées chacune entre une poulie de renvoi (46) et une poulie d'entraînement (51). Des moyens de palpage (7) sont disposés à une hauteur déterminée, de manière à ce que lorsqu'une portion de la surface supérieure de la charge (2) arrive au contact d'un palpeur (70), celui-ci commande l'arrêt des moyens d'entraînement (50) les plus proches. Un tel dispositif permet de s'assurer que la surface supérieure de la charge (2) est horizontale lorsqu'elle a été élevée à la hauteur déterminée. Ce dispositif est particulièrement apte à coopérer à un dépalettiseur comportant des moyens de prise (3) d'une rangée (21) de piles (20) d'ébauches d'emballage.

## Description

La présente invention concerne un dispositif de levage, plus généralement un dispositif de déplacement selon un axe vertical Z, particulièrement bien adapté au levage d'une charge sur palette, ledit dispositif comportant des moyens permettant de régler l'horizontalité de la dernière couche d'objets disposés sur la palette et plus généralement de pouvoir régler l'horizontalité d'au moins une portion d'une surface supérieure de la charge disposée sur la palette.

Dans de nombreux processus industriels il est nécessaire de présenter des objets qui doivent être élevés ou abaissés pour être saisis pour une phase ultérieure du processus. Par exemple dans l'industrie de l'emballage, des étiquettes ou ébauches d'emballage sont disposées en rangées de piles, sur plusieurs couches, et sont présentées à des moyens de prise saisissant une ou plusieurs piles pour les amener vers l'opération d'emballage; cette opération est notamment effectuée dans l'industrie de la cigarette pour la confection des paquets de cigarettes.

Le brevet EP-B-0.530.426 décrit une pince de saisie et de transfert pour un dépalettiseur alors que le brevet EP-B-0.616.963 décrit un dispositif de détection du nombre de rangées d'objets dans une couche disposée sur une palette. Bien que dans le deuxième de ces documents, des moyens soient décrits pour adapter le dispositif de prise d'objets dans le cas où ceux-ci ne sont pas disposés selon une rangée exactement horizontale, l'amplitude du défaut d'horizontalité admissible est limitée. Dans le cas des moyens de saisie décrits dans le premier document, les objets doivent être disposés exactement horizontalement avant de pouvoir être saisis.

Ceci est une limitation dans la mesure où parfois le défaut d'horizontalité de la couche supérieure d'objets à saisir, respectivement de piles d'ébauches, est supérieur au défaut d'horizontalité admissible par les moyens de prise, ceci même si les moyens de support de la palette ou la palette elle-même sont parfaitement horizontaux, ce défaut pouvant provenir d'une palette fortement endommagée ou d'un défaut d'empilage des objets sur la palette. On peut définir deux axes horizontaux sur la palette, un axe longitudinal, parallèle à la direction d'enlèvement des objets par le dispositif de prise et un axe transversal, perpendiculaire au précédent et généralement parallèle à une des rangées d'objets à saisir. Le défaut d'horizontalité peut consister en un décalage angulaire autour de l'axe longitudinal ou autour de l'axe transversal ou plus généralement autour des deux axes. Selon les moyens de prise venant saisir les objets, il peut être nécessaire de devoir compenser le défaut d'horizontalité selon l'un ou l'autre des axes ou selon les deux. Par défaut d'horizontalité on entend ici uniquement un décalage angulaire autour de l'un et/ou de l'autre de ces axes, la surface supérieure de la charge restant toujours essentiellement plane et non gauche.

Ainsi le but de l'invention est de proposer un dispositif de levage d'une charge sur une palette possédant des moyens permettant de compenser un défaut d'horizontalité d'au moins une portion d'une surface supérieure de la charge autour de l'un ou de l'autre des axes décrits ou autour des deux axes.

Pour atteindre ce but, il est proposé un dispositif de levage comportant les moyens décrits dans la revendication 1, les revendications dépendantes décrivant des variantes ou formes d'exécution particulières.

La description qui suit montre plusieurs formes d'exécution d'un dispositif répondant parfaitement au but mentionné ci-dessus, d'autres avantages non encore mentionnés y étant apparents. La description est à lire en regard du dessin annexé comportant les figures où:
la figure 1 est une vue en perspective d'un dispositif selon une première forme d'exécution de l'invention,
la figure 2 est une même vue d'une autre forme d'exécution d'un dispositif selon l'invention,
la figure 3 est une même vue d'encore une autre forme d'exécution d'un dispositif selon l'invention, et
les figures 4A et 4B représentent deux vues orthogonales d'un détail d'exécution de l'un ou l'autre des dispositifs précédents.

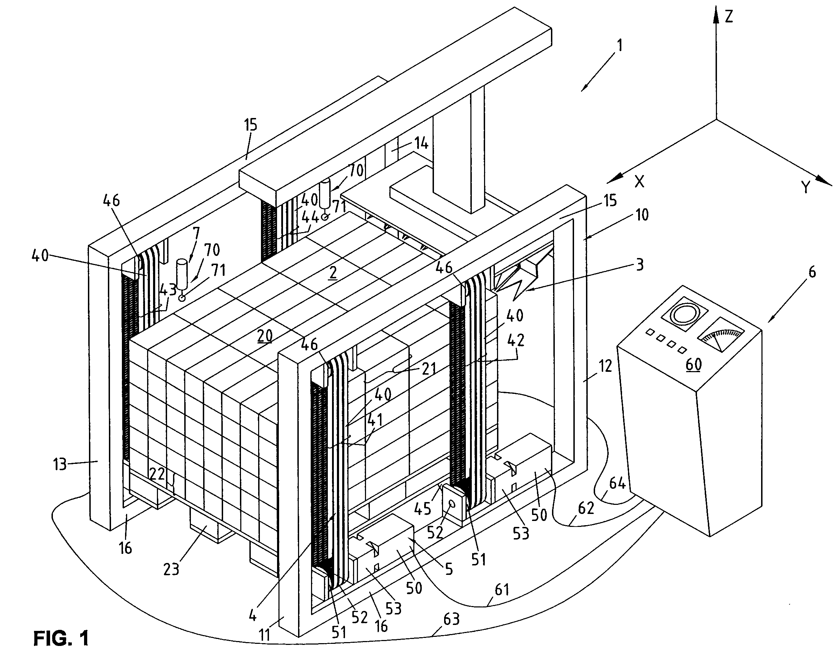

On distingue sur la figure 1 un dispositif de levage 1 d'une charge 2 et un dispositif de prise d'objets 3, qui peut être par exemple un dispositif à pinces comme décrit dans l'un ou l'autre des brevets mentionnés précédemment. Dans le cas représenté ici, la charge 2 est constitué d'ébauches d'emballages disposées en piles 20 généralement de 250 étiquettes, huit piles contiguës formant une rangée 21, et cinq rangées successives formant une couche 22. La palette 23 porte un certain nombre de couches 22 généralement séparées chacune par une feuille intercalaire non représentée sur la figure. Le dispositif à pinces 3 est généralement apte à saisir une rangée 21 complète de piles 20 d'ébauches. Pour une prise efficace d'une rangée 21 il est nécessaire que celle-ci soit disposée selon un alignement très peu différent de l'horizontale, respectivement que le décalage angulaire autour de l'axe longitudinal, soit l'axe X représenté sur le repère orthogonal, soit très faible. Si on a un très léger décalage, le dispositif de pinces 3 peut dans certains cas s'adapter à ce décalage, mais dans le cas d'un décalage plus important il est nécessaire de prévoir des moyens auxiliaires pour le compenser. De même, si on a un décalage angulaire autour de l'axe transversal, soit l'axe Y, le dispositif de pinces 3 qui a été réglé à une certaine hauteur Z pour la prise de la première rangée 21 de la couche supérieure peut se trouver complètement décalé lors de la prise des rangées suivantes. Dans le cas où il ne peut non plus s'adapter à un tel décalage, des moyens auxiliaires doivent aussi être prévus à cet effet. Après que le dispositif de pinces 3 ait saisi une rangée 21 selon une manière connue, il la sépare du reste de la charge 2 et l'envoie pour un traitement ultérieur vers une autre portion de machine non représentée ici.

Dans l'exemple représenté, le dispositif de levage 1 est constitué notamment d'un cadre 10, essentiellement de forme parallélipipédique, comportant notamment quatre piliers verticaux 11,12,13,14, les faces latérales du cadre 10 comportant de préférence des longerons de liaison supérieurs 15 reliant les sommets des piliers 11 et 12 ainsi que 13 et 14, ainsi que d'autres longerons de liaison inférieurs 16 reliant les extrémités inférieures des mêmes piliers, ceci pour augmenter la rigidité du cadre. De préférence au moins une face frontale du cadre 10 ne comporte aucune traverse de liaison transversale afin de faciliter l'entrée/sortie de la palette 23 dans le dispositif. Le cadre 10 est fixé au sol par des moyens adéquats.

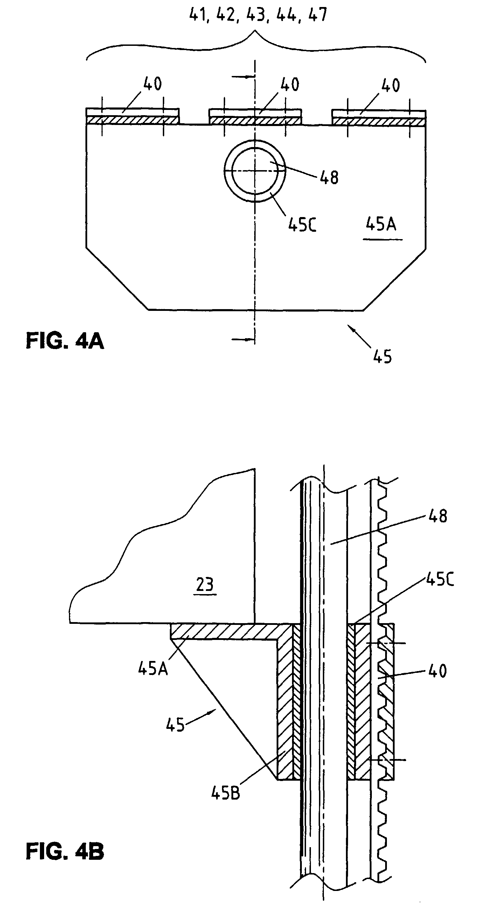

Les moyens de levage d'une palette 23, respectivement d'une charge 2 sont constitués de moyens de suspension 4 et de moyens d'entraînement 5. Les moyens de suspension 4 sont constitués dans cette forme d'exécution d'une pluralité de courroies crantées 40, réparties ici en quatre jeux 41,42,43,44 de chacun trois courroies 40 répartis à proximité des quatre coins de la palette 23; les courroies 40 de chaque jeu étant munies d'un moyen de prise de palette 45, fixé auxdites courroies 40, les quatre moyens de prise de palette 45 étant généralement tous disposés à la même hauteur. Seul le moyen de prise de palette 45 se rapportant au jeu de courroies 42 peut être distingué sur la figure. Les moyens de prise de palette 45 sont vus et décrits plus en détail plus bas, en regard des figures 4A et 4B. Afin de limiter l'allongement des courroies 40, les âmes desdites courroies sont de préférence garnies d'armatures, formées de brins ou de câbles d'acier ou d'un autre matériau résistant à la traction comme le Kevlar. Des courroies crantées ainsi armées sont généralement disponibles dans le commerce.

Les moyens d'entraînement 5 sont constitués dans cette forme d'exécution de quatre moteurs 50, de préférence des moteurs électriques, entraînant chacun un jeu de poulies d'entraînement crantées 51 fixées à un arbre d'entraînement 52 sortant d'un réducteur à engrenages 53. Chacun des jeux 41,42,43,44 de courroies 40 est tendu entre un premier jeu de poulies de renvoi crantées 46 et un jeu de poules d'entraînement crantées 51, seuls les moteurs 50, réducteurs 53 et jeux de poulies d'entraînement 51, correspondant aux jeux de courroies 41 et 42 étant visibles sur la figure. Chaque jeu de poulies d'entraînement 51 et de poulies de renvoi 46 comprend trois poulies crantées dans le cas illustré ici. Chacune des poulies de renvoi 46 est fixée de manière à pouvoir librement pivoter autour d'un axe monté de préférence parallèlement à l'axe X et fixé d'une manière connue de préférence sous un des longerons supérieurs 15, alors que chaque jeu de poulies crantées d'entraînement, est montée de manière fixe sur l'arbre d'entraînement 52 correspondant, à l'aplomb des jeux de poules 46, parallèlement et à proximité de chacune des barres de liaison inférieures 16.

Les moyens de commande 6 sont constitués ici d'un pupitre de commande 60 relié par les liaisons 61, 62, 63 et 64 aux quatre moteurs d'entraînement 50 décrits plus haut. Les moyens de commande 6 peuvent être propres au dispositif de levage 1 ou alors faire partie d'un ensemble de commande plus général de l'installation de dépalettisation, par exemple, dans le cas où ce dispositif est destiné à alimenter avec un produit déterminé une machine de production, ce peut être le moyen de commande de ladite machine qui commande automatiquement le fonctionnement du dispositif élévateur selon ses propres besoins.

Lorsque les moyens de prise de palette 45 sont amenés en position bas, une palette 23 chargée est amenée par une face frontale ne comportant de préférence aucune barre de liaison transversale susceptible de gêner le passage de la palette et de sa charge. Les moyens permettant d'amener la palette 23 et de la déposer sur les moyens de prise 45 sont connus de la technique, il peut s'agir d'un chariot élévateur mobile porte-palette, d'un train de rouleaux pénétrant jusque dans le cadre 10 ou de tous autres moyens idoines. De préférence une ou des butées (non représentées) sont alors en position pour limiter le mouvement d'avance de la palette 23 afin de la positionner exactement sur les moyens de prise 45. Les quatre moteurs 50 peuvent alors être actionnés afin d'entraîner les quatre jeux de poulies d'entraînement 51, respectivement les jeux de courroies 41, 42, 43, 44, respectivement élever la palette 23 et sa charge 2, suspendue aux moyens de prise 45. Ce mouvement d'élévation peut être arrêté soit en déclenchant manuellement l'alimentation des moteurs 50, soit en déclenchant de préférence cette alimentation par des moyens de palpage 7 tels que décrits ci-dessous.

Le dispositif est complété par des moyens de palpage 7, comprenant par exemple quatre palpeurs 70 disposés par exemple au dessus et au droit des quatre piles 20 disposées aux quatre coins de la charge 2, seuls les deux palpeurs 70 proches des jeux de courroies 43 et 44 étant visibles sur la figure. Chaque palpeur 70 est fixé sur un cadre non représenté, à une hauteur Z déterminée, de préférence une hauteur proche de celle à laquelle la couche supérieure 22 est à décharger par les moyens de prise 3. Chaque palpeur 70 est constitué d'un élément de touche, par exemple un piston 71 dont un déplacement vertical est signalé à l'unité de commande 6. Ainsi, lors d'une élévation de la charge 2, un actionnement simultané des quatre palpeurs 70 indique que la surface supérieure de la charge 2 est horizontale ou pour le moins dans une tolérance telle que le dispositif de prise 3 peut s'en accommoder. Au contraire, si seuls deux palpeurs latéraux, disposés du même côté et parallèlement à l'axe X, sont premièrement actionnés simultanément, ceci signifie que la surface supérieure est inclinée autour de l'axe X, alors que si seuls deux palpeurs frontaux disposés du même côté et parallèlement à l'axe Y sont premièrement actionnés simultanément, ceci signifie que la surface supérieure de la charge 2 est inclinée autour de l'axe X. Si un seul palpeur 70 est premièrement actionné, ceci signifie que la surface supérieure de la charge 2 est inclinée autour des deux axes X et Y. Dans ce cas, les moyens de commande 6 peuvent comprendre un programme de calcul ou sont conçus de telle manière que lors d'une élévation de la charge 2, l'actionnement d'au moins un palpeur 70 commande l'arrêt du moteur d'entraînement 50 correspondant le plus proche, jusqu'à ce que tous les palpeurs 70 aient été actionnés d'une même valeur, signalant ainsi que la surface supérieure de la charge 2 est horizontale et que les piles d'étiquettes peuvent maintenant être saisies par les moyens de prise 3. Les moyens de palpage 7 décrits ci-dessus peuvent être propres au dispositif de levage 1 ou alors faire partie des moyens de prise 3.

Vu que toute la face supérieure du cadre 10 est libre, il est facile à des moyens de prise d'objet de venir décharger la palette arrêtée en position supérieure afin d'alimenter la machine de production. Dans le cas où les objets à prélever de la palette sont disposés en couches successives, les moyens de palpage 7 peuvent commander des élévations successives de la palette afin de venir toujours prendre lesdits objets à une hauteur constante. Un tel dispositif de prise d'objets est notamment décrit dans EP-A-0.616.962.

Lorsque la palette 23 a été déchargée, les moteurs 50 sont à nouveau actionnés afin de faire redescendre la palette; la commande des moteurs peut être conçue de manière à ce que la vitesse de descente de la palette soit supérieure à sa vitesse de montée. Lorsque la palette vide est en position inférieure, il est possible de la pousser sur des rouleaux ou des glissières (non représentés) vers la face arrière du cadre 10 par la palette pleine en cours de chargement dans le dispositif.

La première forme d'exécution décrite ci-dessus d'un dispositif de levage comprend donc quatre moteurs indépendants reliés à des moyens de palpage permettant ainsi de compenser des défauts d'horizontalité de la surface supérieure de la charge selon l'un ou l'autre des axes horizontaux ou selon ces deux axes.

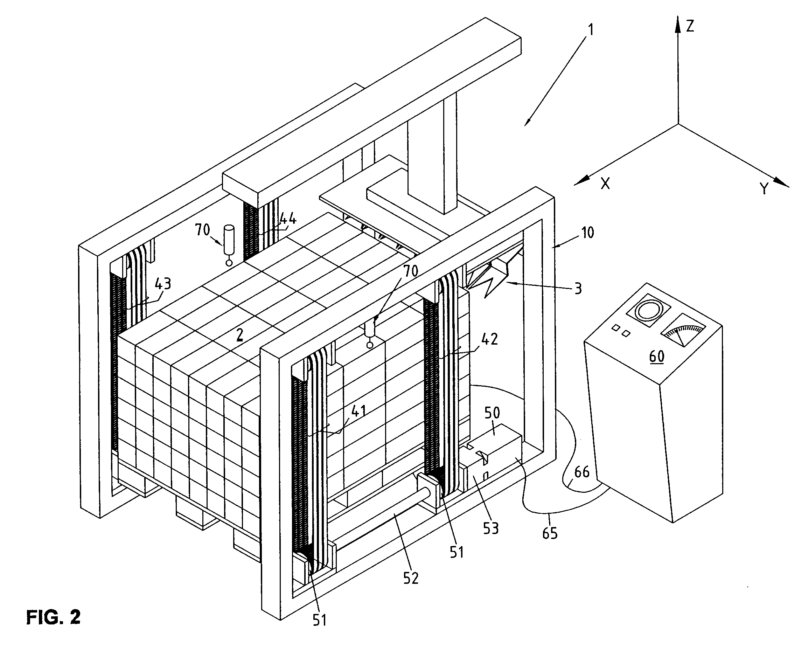

La deuxième forme d'exécution du dispositif de levage 1 visible à la figure 2 diffère de celle décrite plus haut en ce que les deux jeux de poulies d'entraînement 51 disposés sur chaque face latérale du cadre 10 sont reliés ensemble par un seul arbre d'entraînement 52, respectivement à un seul moteur 50. Ainsi, on a un premier moteur 50 pour l'entraînement des jeux de courroies crantées 41 et 42 et un deuxième moteur (non visible sur la figure) pour l'entraînement des jeux de courroies crantées 43 et 44. Ainsi, les deux jeux de courroies disposés sur une même face latérale du cadre 10 sont entraînés simultanément. Il s'ensuit que seul un ajustement d'horizontalité autour d'un axe parallèle à l'axe longitudinal X est possible. Dans ce cas seuls deux palpeurs 70 sont nécessaires, disposés parallèlement à l'axe Y, de manière à détecter comme précédemment un défaut d'horizontalité autour de l'axe X. Les moteurs 50 sont reliés au pupitre de commande 60 par les liaisons 65 et 66.

En variante, il est aussi évidemment possible de concevoir un dispositif de levage de même type que celui de la deuxième forme d'exécution décrite, apte à compenser un défaut d'horizontalité autour de l'axe transversal Y en prévoyant des moyens d'entraînement communs aux deux paires de jeux de courroies 41, 43 et 42, 44 soit aux paires alignées selon des axes parallèles à l'axe Y. Les palpeurs 70 sont alors dans ce cas, à aligner selon un axe parallèle à l'axe X, les dispositions constructives du cadre 10 étant à adapter en conséquence.

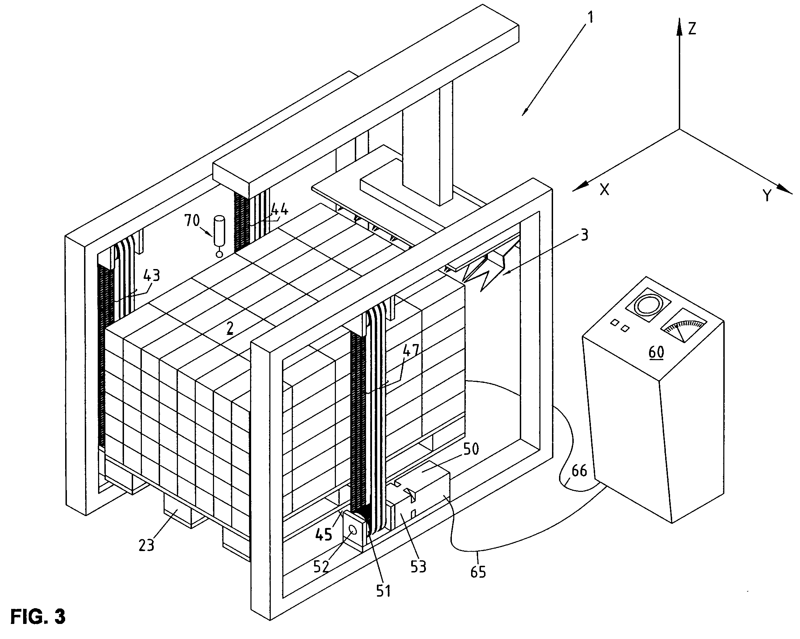

Une troisième forme d'exécution du dispositif de levage 1 est visible à la figure 3. Dans ce cas, deux jeux de poules situés sur une même face latérale du dispositif ont été regroupés en un seul jeu disposé selon une position centrale de manière à ce que la palette 23 ne soit supportée qu'en trois' points, les deux points correspondant aux jeux de courroies 43 et 44 ainsi que le point correspondant au jeu de courroies 47 disposé au centre de la dimension longitudinale de la palette. Comme précédemment un seul moteur 50 actionne le jeu de courroies 47. La palette étant supportée en trois points, respectivement par trois moyens de prise de palette 45, il est possible d'ajuster la surface supérieure de la charge 2 de manière à la rendre horizontale autour des deux axes X et Y dans le cas où les jeux de courroies 43 et 44 sont chacun entraînés par un moteur indépendant ou alors seulement autour de l'axe X si ces deux jeux de courroies sont entraînés par un seul moteur commun. La disposition des moyens de palpage 7 dont un seul palpeur 70 est représenté sur la figure à titre de rappel est alors adaptée à la disposition choisie des entraînements des jeux de courroies.

Les figures 4A et 4B représentent deux vues détaillées des moyens de prise de palette 45, la figure 4A étant une vue par dessus alors que la figure 4B est une coupe orthogonale de la figure précédente. Le moyen de prise de palette 45 est essentiellement formé d'un élément en forme de cornière, une face 45A dudit élément étant essentiellement horizontale et supportant une portion de la palette 23 sur sa face supérieure, alors que l'autre face 45B est fixée de manière connue aux courroies 40 de chaque jeu 41,42,43,44 ou 47. Vu la souplesse des courroies 40, on aurait une inclinaison vers le bas de la surface supérieure de la face 45A lorsqu'une palette y serait suspendue. Afin d'éviter cet effet fâcheux, des moyens de guidage sont prévus. Une forme d'exécution desdits moyens de guidage consiste à prévoir un arbre de guidage 48 fixé rigidement au cadre 10, autour duquel coulisse une bague de guidage ou une bague à rouleaux de guidage 45 C disposée sur la face 45B du moyen de prise 45. Ainsi, la face supérieure 45A du moyen de prise de palette 45 suspendu aux courroies 40, reste toujours horizontale, qu'une palette y soit accrochée, ou non. D'autres formes d'exécution des moyens de guidage peuvent être envisagées, en particulier la forme circulaire comme représentée de l'arbre de guidage 48 n'est pas essentielle, il pourrait avoir n'importe quelle forme idoine, notamment être de section trapézoïdale, les moyens de coulissement étant adaptés. En particulier, lorsque deux jeux de courroies sont entraînés par un seul moteur et fonctionnent donc uniquement simultanément, il est possible de relier les deux moyens de prise de palette 45 des deux jeux de courroies en question par une barre de liaison; les moyens de guidage pouvant dans ce cas être attenants à la ou les barres de liaison.

De préférence, et notamment dans le cas où le dispositif de levage travaille dans une atmosphère chargée de poussière, les parties mécaniques en rotation ou en coulissement, poules, axes, moteurs et barres de guidage sont protégées par un capotage.

Diverses variantes de construction peuvent être envisagées, dépendant essentiellement de l'environnement du dispositif ainsi que de son utilisation. Par exemple il n'est pas indispensable que le cadre 10 soit absolument conforme à ce qui a été décrit, l'important étant de pouvoir bénéficier d'un cadre rigide ayant des moyens aptes à recevoir les jeux de poules de renvoi 46 ainsi que d'entraînement 51. De manière avantageuse une face latérale du cadre 10 devrait pouvoir être mobile latéralement, de manière à pouvoir adapter le dispositif à une palette de largeur différente.

De même, les moyens de suspension ont été décrits comme étant constitués de trois ou quatre jeux de trois courroies sans fin, tout autre nombre de jeux constitué de tout autre nombre de courroies peut évidemment être envisagé, le choix du nombre total de courroies et de leur groupement dépendant essentiellement de la charge maximum à élever en regard de la résistance propre de chaque courroie. De même, d'autres moyens de suspension que des courroies peuvent être prévus, par exemple des chaînes à rouleaux ou alors des arbres filetés verticaux, mis en rotation par les moyens d'entraînement, chaque moyen de support de palette comportant un tube taraudé engagé sur le filetage de l'arbre correspondant; dans ce dernier cas on pourrait s'abstenir des moyens de guidage complémentaires décrits plus haut.

Les moyens d'entraînement en rotation, moteurs 50, réducteurs à engrenages 53, poules d'entraînement 51 ont été décrits comme étant disposés proches du sol, soit sur les longerons inférieurs 16; ils peuvent évidemment être disposés ailleurs, par exemple proches des barres de liaison supérieures 15. Les moteurs 50 ont été décrits comme étant des moteurs électriques, mais il peut tout aussi bien s'agir de moteurs d'un autre type, par exemple des moteurs hydrauliques ou pneumatiques, l'important étant que chaque moteur fonctionne à la même vitesse et que les différents moteurs puissent être commandés indépendamment. En variante il est aussi possible qu'au lieu de quatre, trois ou deux moteurs, on ait un seul moteur et que les variations d'entraînement décrites soient obtenus au moyen de dispositifs d'embrayage propres à chaque jeu ou paire de jeux de courroies.

Les moyens de palpage 7 ont été décrits comme étant constitués de palpeurs 70 à piston; d'autres types de palpeurs sont aussi possibles, des palpeurs à ressort ou alors des dispositifs détecteurs optiques, magnétiques ou capacitifs de positionnement. De préférence, lorsque le dispositif de levage fonctionne en collaboration avec un dispositif de prise d'objets comme décrit plus haut, il est possible d'utiliser les moyens de palpage déjà présents sur ledit dispositif de prise pour les opérations de palpage et de détermination de l'horizontalité de la surface supérieure de la charge décrites précédemment. D'autre part les moyens de palpage ont été décrits comme comprenant quatre ou deux palpeurs selon le nombre d'axes qu'il est possible de compenser; en fait vu que seulement trois points sont nécessaires pour la détermination d'un plan, le dispositif peut ne comprendre que trois palpeurs reliés à des moyens de calcul faisant partie des moyens de commande, lesdits moyens de calcul étant aptes à déterminer la position, respectivement l'horizontalité de la surface supérieur de la charge en fonction des palpeurs actionnés ou non actionnés, ceci indépendamment de la position, respectivement de l'horizontalité de la palette elle-même, puis de commander les moteurs correspondants pour le réglage d'horizontalité de cette surface supérieure. Dans le cas d'un réglage possible autour de deux axes, les moyens de commande peuvent être agencés afin de régler l'horizontalité premièrement autour d'un premier axe puis seulement après autour du deuxième axe.

Le dispositif décrit ci-dessus est parfaitement adapté pour travailler en coopération avec l'un ou l'autre des moyens de prise décrits dans les brevets mentionnés plus haut. Il peut aussi être utilisé avec d'autres moyens de prise, voire pour un autre usage nécessitant qu'au moins une portion d'une surface supérieure de la charge soit horizontale à une hauteur déterminée. L'utilisation d'un tel dispositif n'est pas limitée à une élévation d'une charge mais peut tout aussi bien être adaptée pour un abaissement d'une charge.

## Revendications

1. Dispositif (1) de déplacement selon un axe vertical (Z) d'une charge (2) présentant au moins une portion d'une surface supérieure plane, comportant une pluralité de moyens de suspension (45;41,42,43,44;47) disposés en une pluralité de points du pourtour de la charge, des moyens d'entraînement (50,51,52,53) desdits moyens de suspension, chaque moyen d'entraînement étant apte à entraîner au moins un moyen de suspension, ainsi que des moyens de commande (6) desdits moyens d'entraînement,
caractérisé en ce qu'il comporte en outre
des moyens de palpage (7) aptes à détecter un défaut d'horizontalité de ladite portion de surface supérieure plane de la charge (2), lesdits moyens de palpage étant aptes à actionner lesdits moyens de commande afin de commander indépendamment lesdits moyens d'entraînement, afin de, pour une élévation déterminée (Z), ajuster l'horizontalité de ladite portion de surface supérieure plane de la charge autour d'un axe longitudinal (X) et/ou d'un axe transversal (Y).

2. Dispositif selon la revendication 1, caractérisé en ce qu'il comporte quatre moyens de suspension (45;41,42,43,44) disposés à proximité des quatre coins d'une palette (23) supportant la charge (2), quatre moyens d'entraînement (50,51,52,53) entraînant chacun un moyen de suspension, et au moins trois moyens de palpage (70).

3. Dispositif selon la revendication 1, caractérisé en ce qu'il comporte quatre moyens de suspension (45;41,42,43,44) disposés à proximité des quatre coins d'une palette (23) supportant la charge (2), deux moyens d'entraînement (50,51,52,53) entraînant chacun une paire de moyens de suspension alignés selon un premier axe et au moins deux moyens de palpage (70) alignés selon un deuxième axe perpendiculaire audit premier axe.

4. Dispositif selon la revendication 1, caractérisé en ce qu'il comporte trois moyens de suspension (45;43,44,47), disposés en trois points du pourtour d'une palette (23) supportant la charge (2), trois moyens d'entraînement (50,51,52,53) entraînant chacun un moyen de suspension et au moins trois moyens de palpage (70).

5. Dispositif selon la revendication 1, caractérisé en ce qu'il comporte trois moyens de suspension (45;43,44,47), disposés en trois points du pourtour d'une palette (23) supportant la charge (2), deux moyens d'entraînement (50,51,52,53) entraînant respectivement deux, respectivement un des moyens de suspension et au moins deux moyens de palpage (70).

6. Dispositif selon la revendication 3, caractérisé en ce que le premier axe est parallèle à l'axe longitudinal (X), alors que le second axe est parallèle à l'axe transversal (Y) du dispositif.

7. Dispositif selon la revendication 3, caractérisé en ce que le premier axe est paralléle à l'axe transversal (Y), alors que le second axe est parallèle à l'axe longitudinal (X) du dispositif.

8. Dispositif selon l'une des revendications précédentes, caractérisé en ce que les moyens de suspension (41,42,43,44;47) sont constitués chacun d'un jeu d'au moins une courroie crantée (40) circulant entre une poulie crantée d'entraînement (51) et une poulie de renvoi crantée (46), des moyens de prise (45) de la charge (2) étant fixés sur chacun desdits jeux de courroies.

9. Dispositif selon l'une des revendications 1 à 7, caractérisé en ce que les moyens de suspension (41,42,43,44;47) sont constitués chacun d'un jeu d'au moins une chaîne à rouleaux circulant entre une roue à chaîne d'entraînement (51) et une roue à chaîne de renvoi (46), des moyens de prise (45) de la charge (2) étant fixés sur chacun desdits jeux de chaînes.

10. Dispositif selon l'une des revendications 8 ou 9, caractérisé en ce qu'il comporte en outre des moyens de guidage (48) desdits moyens de prise (45).

11. Dispositif selon l'une des revendications 1 à 7, caractérisé en ce que les moyens de suspension sont constitués chacun d'un arbre fileté disposé verticalement et mis en rotation par les moyens d'entraînement, chaque moyen de prise étant engagé autour du filetage correspondant et entraîné par celui-ci.

12. Dispositif selon l'une des revendications précédentes, caractérisé en ce que les moyens d'entraînement comprennent au moins un moteur électrique (50).

13. Dispositif selon l'une des revendications précédentes, caractérisé en ce que les moyens de palpage (7) sont fixés à une hauteur déterminé afin d'être actionnés lorsque la charge a été amenée à ladite hauteur pour être ensuite déchargée.

14. Dispositif selon la revendication 13, caractérisé en ce que les moyens de palpage (7) sont constitués d'un piston (71) coulissant dans un tube (70), un déplacement dudit piston signalant le contact avec une portion de la surface supérieure de la charge (2).

15. Dispositif selon l'une des revendications 13 ou 14, caractérisé en ce que les moyens de palpage (7) sont propres à un dispositif de prise (3) d'une installation de dépalettisation.

16. Dispositif selon l'une des revendications précédentes, caractérisé en ce que les moyens de palpage (7) sont reliés à des moyens de calcul ou de commande (6) aptes à déterminer autour de quel(s) axe(s) le défaut d'horizontalité s'est produit et à commander les moyens d'entraînement (50) en conséquence afin de compenser ledit défaut d'horizontalité.

17. Utilisation d'un dispositif selon l'une des revendications précédentes pour la dépalettisation d'ébauches d'emballage disposées en plusieurs couches (22) de rangées (21) de piles (20) d'ébauches sur une palette (23), en liaison avec un dispositif de prise (3) d'au moins une pile (20) de la rangée de la couche supérieure.
